# EUROPEAN PATENT SPECIFICATION

(11) **EP 2 210 925 B1**
(45) Date of publication and mention of the grant of the patent: **06.05.2020**
(21) Application number: 09179107.9
(22) Date of filing: 14.12.2009
(51) Int. Cl.: B05C 17/00, B05C 11/10, B05C 17/005, E04F 21/06, E04F 21/165, C09J 5/08

(54) **Light touch sealant applicator device**
Vorrichtung zum leichten Auftragen von Dichtmittel
Dispositif d'applicateur étanche de frottis

(30) Priority: 21.01.2009 US 205549 P
(43) Date of publication of application: 28.07.2010
(73) Proprietor: Rohm and Haas Company, Philadelphia, PA 19106-2399 (US)
(72) Inventor: Bowe, Michael D., Doylestown, PA 18901 (US); Verbaro, David A., Cinnaminson, NJ 08077 (US); Szewczyk, Janah C., Philadelphia, PA 19143 (US)
(74) Representative: Houghton, Mark Phillip

(56) References cited:
- US-A- 3 020 579
- US-A- 4 810 123
- US-A1- 2001 003 563
- US-A1- 2002 148 057

## Description

The present invention relates to devices for applying a fluid sealant with little or no manual pressure or strain, and to methods for using the devices to provide a seal, such as a weather resistive barrier. More particularly, it relates to devices for applying foam sealants comprising a long handle or wand attached via a universal joint to the top side of an applicator head that has a chamber on its underside for continuously applying a sealant at any angle to gaps in a substrate, while moving the device in any desired direction.

Building structures are commonly constructed with exterior wood, wood composite, cement or gypsum-based sheets, a.k.a. sheathing, that are overlaid with decorative facades or claddings (e.g., wood, aluminum or vinyl sidings or brick facades). While under construction, such buildings require a weather resistive barrier. Several kinds of weather resistive barriers have been proposed, including flexible sheeting material and fluid materials, such as liquids and muds; however, each known weather resistive barrier solution is labor intensive.

Known weather resistive barriers may comprise flexible sheeting material (e.g., Tyvek™ from DuPont, felt or tar paper) that is nailed or stapled to the construction sheathing before the cladding is mounted. Such sheeting material provides some protection, including resistance against wind and water penetration, while the building is under construction and after the cladding is mounted. In addition, such sheeting is must be fastened by hand to all exterior portions of the treated structure and has proven to be labor intensive to apply. This means that the user must physically attach the sheeting to every portion of the exterior structure; this may require accessing hard to reach areas and can be dangerous if a ladder or scaffold is required for such access. Further, the sheeting does not seal the structure and is not a very good wind or water barrier.

Other known weather resistive barriers comprise liquid coatings on the wood, cement or gypsum sheathing, while gaps between building panels are closed by applying tape or a heavy bead of caulk to the gaps. Such tapes often require a separate coating that must be applied with a trowel or scraper that dries to form a hard sealant over the tape. The resulting taping and coating process is labor intensive and, as in the case of sheeting, the user must physically trowel or scrap every gap on the exterior of the structure and even in hard to reach areas.

Recently, compressible latex foams have been proposed as water or air penetration sealants for gaps in sheathing and windows in building structures under construction or to allow a subsequently applied coating to be applied continuously from one panel to the next. Because the foams can be used without tape and because they compress neatly against the surface of sheathing or the windows to seal gaps therein or around them, the foams permit of application without concern for the neatness required in applying caulk, mud or foams that do not compress, and without the need for troweling or scraping.

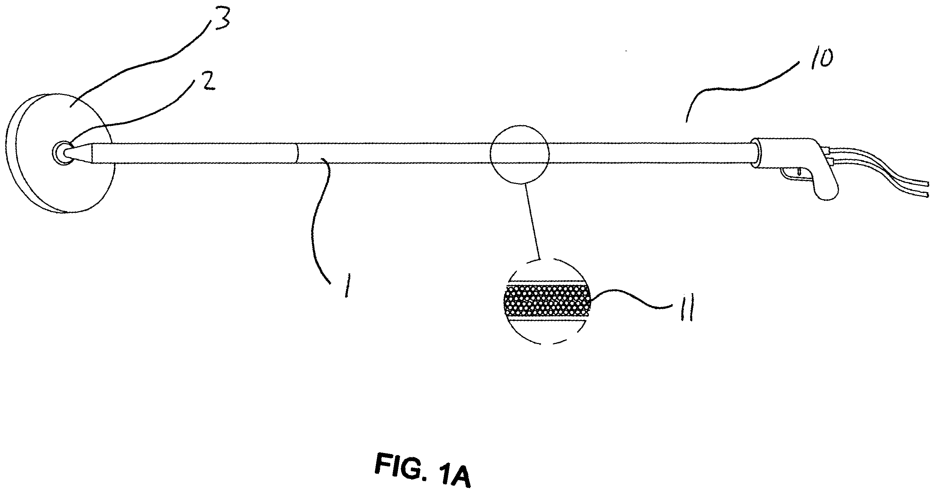

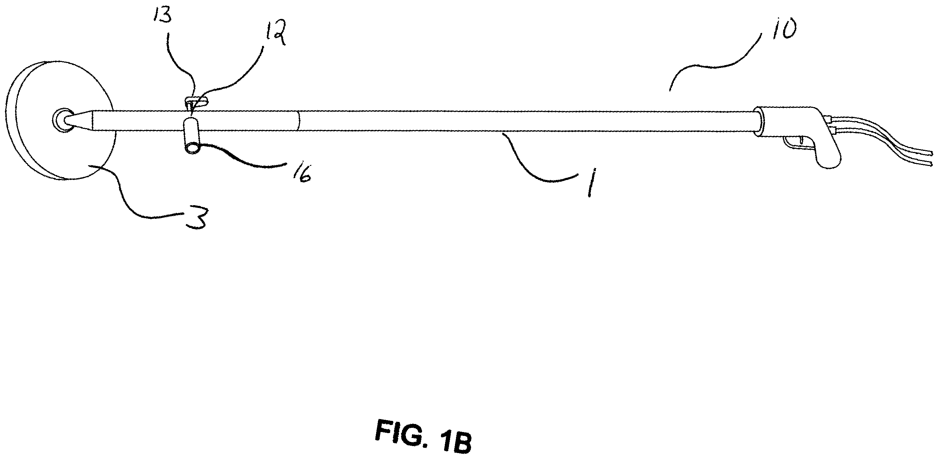

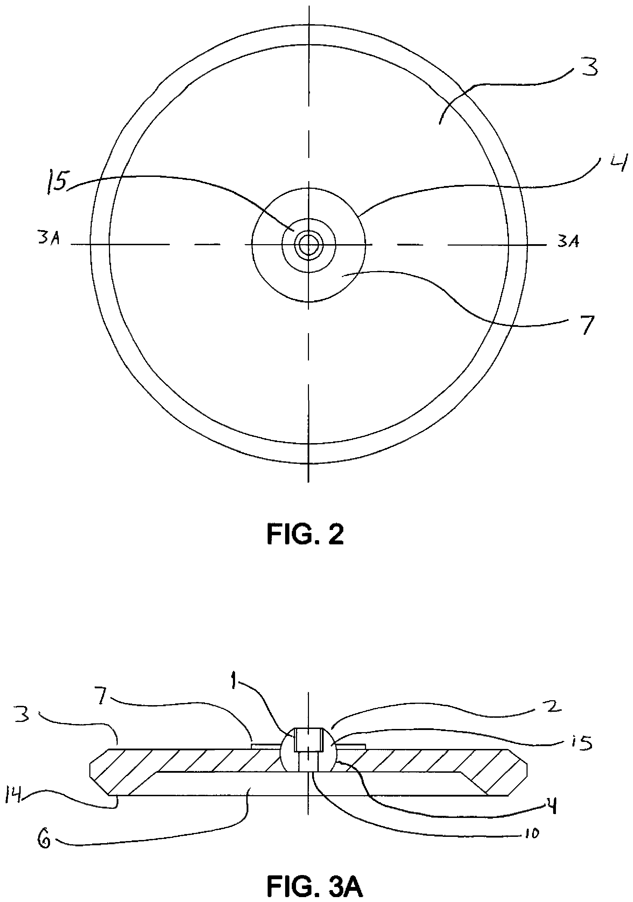

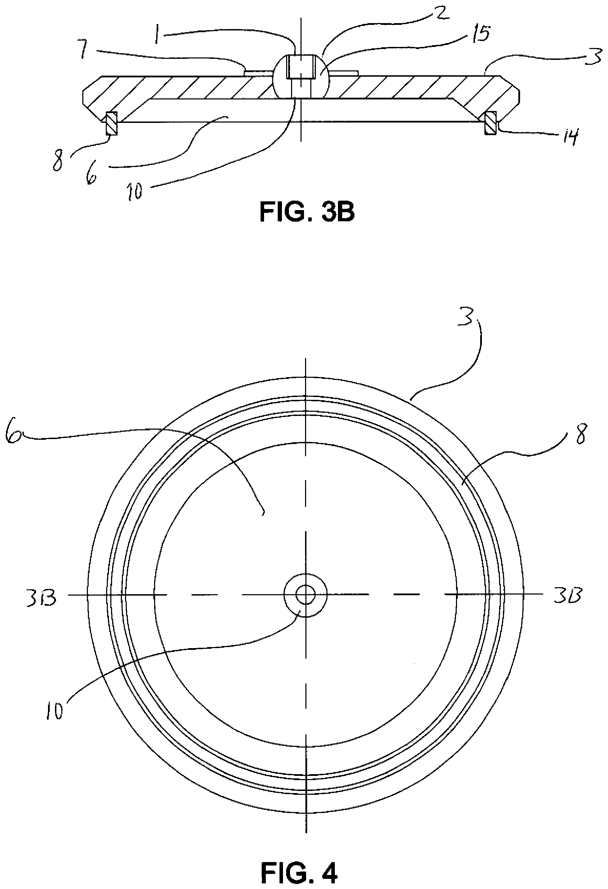

Known applicators for foam sealants include those disclosed in U.S. patent no. 6,284,077 B1, to Lucas et al. comprise spray canisters (102 in Fig. 1 of Lucas et al.) that eject foam through a straw or tube. These canisters generally build the foam so that it is taller than the surfaces adjacent the gap sealed. The Lucas et al. foam retains at least 45% of its original volume after 24 hours; thus, where the foam is intended to be flush with adjacent surfaces, the excess must be struck off flat with a trowel or blade (322 in Fig. 3 of Lucas et al.) in a second step. Nevertheless, to date no device exists to apply a foam sealant so that it is flush with the structure surface in a single action. Documents US 2001/003563; US 3 020 579; US 2002/148057 and US 4 810 123 disclose other relevant applicators.

The present inventors have sought to solve the problem of safely and efficiently sealing every gap in a sheathed building or other structure to actually make it weather resistant while at the same time creating a surface suitable for siding or cladding and have found a device adapted to solve this problem.

### STATEMENT OF THE INVENTION

The devices of the present invention comprise a handle or wand with a fluid sealant supply, either as part of the wand or as a separate supply tube, and an applicator head, wherein the wand is attached to the top of an applicator head via a universal joint, further wherein the applicator head includes a chamber on its underside which is sufficiently large to enable a constant supply of a fluid sealant to a substrate that is to be sealed, and, still further wherein, the applicator head has disposed around its lower periphery an edge adapted to strike the sealant flat, wherein the chamber edge has a row of brush bristles extending from the chamber edge in a downward direction.

Preferably, the wand is hollow in an axial direction, whereby the wand delivers the fluid sealant to the applicator head through an opening in the universal joint. Alternatively, the device comprises the wand as a handle and, as a fluid sealant supply, a supply tube attached to the applicator head separately from the wand. The device may also comprise a wand that can deliver sealant into an outlet upstream of the universal joint, such as an opening actuated by a bypass valve, and then into a supply tube attached to the applicator head.

Preferably, the universal joint attaching the wand to the top of the applicator head comprises a ball in socket joint through which the sealant can flow.

Preferably, the applicator head of the device is removable.

The chamber edge disposed around the lower periphery of the applicator head may be integral with the applicator head and may comprise the bottom edge of the applicator head. The chamber is made of a material sufficiently hard to strike flat any sealant that is applied to a substrate. The chamber edge has short brush bristles disposed within it in a normal relation to the bottom plane of the applicator head. In operation, the brush bristles are, disposed normal to the surface of the substrate to be sealed to thereby accommodate outside corners in the substrate or undulation or variation in the substrate surface.

In a preferred embodiment, the wand or supply tube has disposed within it one or more foam generator that comprises a static mixer, such as a bead matrix.

According to another embodiment, the present invention provides methods of forming a seal, such as a weather resistive barrier, comprising applying a compressible sealant composition, preferably an aqueous polymer foam composition, to a gap, crack or joint in a substratestructure, such as a sheathed building structure under construction or remodeling, with the devices of the present invention while, in the same motion, striking the applied foam flat or flush with the surface of the structure, optionally, followed by coating or covering the remaining surface of the structure, e.g. a building, to form a weather resistive barrier, such as, preferably, with a paint or coating material. The applying to the gaps can be performed moving along the gaps of the structure in any direction.

The methods preferably comprise applying the sealant with little or no applied pressure aside from that applied by the weight of the applicator head, i.e. a touch of the applicator device to the substrate surface.

The applying to the gaps can be performed at a rate of 0.08 m/s or more, or up to 2.5 m/s, preferably at a rate of 0.5 m/s or more.

### BRIEF DESCRIPTION OF THE DRAWINGS

Figure 1A depicts a preferred embodiment of a device in accordance with the present invention having a foam generator.
Figure 1B depicts another embodiment of a device in accordance with the present invention having a bypass valve **12** in wand **1.**
Figure 2 depicts the top of a disclosed but not claimed embodiment of an applicator head 3 in accordance with the present disclosure
Figure 3A depicts a cross section of the applicator head **3** shown in Fig. 2.
Figure 3B depicts a cross section of a preferred embodiment of the applicator head **3** shown in Fig. 4.
Figure 4 depicts the underside of a preferred embodiment of an applicator head **3** in accordance with the present invention.
Figure 5 depicts an embodiment of a preferred ball in socket universal joint **2** (Fig. 1) in accordance with the present invention.
Figure 6 depicts an alternative embodiment of the fluid sealant supply into the applicator head in accordance with the present invention.

All ranges recited are inclusive and combinable. For example, the recitation of a velocity of 0.08 m/s or more, or up to 2.5 m/s, preferably, 0.5 m/s or more, includes all of the ranges of 0.08 to 2.5 m/s, 0.08 to 0.5 m/s, and 0.5 to 2.5 m/s.

Unless otherwise indicated, any term containing parentheses refers, alternatively, to the whole term as if no parentheses were present and the term without them (i.e. excluding the content of the parentheses), and combinations of each alternative. Thus, the term (co)polymer refers to a homopolymer or copolymer.

As used herein, the phrase "aqueous" includes water and mixtures comprising water and one or more water-miscible solvent.

As used herein, the term "emulsion polymer" means a polymer made in water or an aqueous mixture by an emulsion polymerization process.

As used herein, unless otherwise indicated, the phrase "glass transition temperature" or "Tg" refers to the calculated glass transition temperature of any (co)polymer as determined using the Fox equation (T.G. Fox, Bull. Am. Physics Soc., Volume 1, Issue No. 3, page 123 (1956)).

As used herein, "wt%", "wt.%" or "wt. percent" means weight percent.

The devices of the present invention enable the rapid application of fluid sealants to gaps of highly variable widths in any building structure along which the applicator head can be moved. Such structures may include, for example, sheathed building structures under construction or renovation, such as, for example, homes, schools, warehouses, office buildings, and commercial spaces, but may include any structure that needs sealing. The device comprises a chamber in the underside of an applicator head which chamber is an open space that can fill with sealant, e.g. foam, and thereby continuously replenish the sealant supplied to the substrate surface. Thus, if the applicator head is 0.1 meter wide and has a chamber that is 0.09 meter wide, the devices can be used to continuously apply fluid sealants to any gap that is less than 0.09 meter wide. Because the device contacts the substrate all around the chamber, the device can be moved in any direction. Thus, an operator can move the device up-down and left-right while continuously extruding and striking off a bead of fluid sealant. Further, the devices comprise a universal joint attaching the applicator head to a wand so as to enable the applicator head to be moved in any direction in relation to the wand and at any angle above which no mechanical hindrance will occur between the wand and the applicator head, e.g. from 90° or normal to the substrate surface to 30° or less or such that the wand is almost parallel to the substrate surface. The applicator head only turns when operator turns the wand. Still further, the chamber edge on the underside of the applicator head of the devices can be formed of a durable material, such as wood, plastic, hard rubber, or sheet metal, e.g. aluminum, whereby it can be readily slid or skimmed along the surface of the substrate to be sealed at any speed within an operator's ability. For example, an operator can walk briskly along while applying the sealant. In addition, because the devices are very light, a long wand can be used to enable easy access to hard to reach places or high points on the substrate. Finally, when the devices are used to apply compressible fluid sealants, e.g. compressible foams, a very small amount of pressure no more than the weight of the device itself need be applied to seal the gaps in the substrate; the devices are easy to use.

As shown in Fig. 1A, device **10** comprises a wand **1** adapted to deliver a fluid sealant to a substrate such that the wand **1** has within in a foam generator **11** of a bead matrix. The bead matrix in foam generator **11** will form a foam when known polymer compositions are passed through it, such as aqueous polymer emulsions which include surfactants or propellant gases. Device **10** further comprises a universal joint **2** that connects wand **1** to applicator head **3.**

As shown in Fig. 1B, device **10** may be equipped with a bypass valve **12** in wand **1** to shut off flow of fluid sealant to applicator head **3** and permit it to flow through tube **16** extending from bypass valve **12.** The bypass valve is actuated by stopcock **13.** In this embodiment, a user can applying fluid sealant to a narrow area or inside corner in a substrate structure that cannot be accessed using applicator head **3.**

As shown in Fig. 2, top of applicator head **3** in accordance with an embodiment disclosed but not forming part of the present invention includes recess **4** adapted to receive ball **15** of a ball in socket universal joint **2,** as shown in Figs. 1A, 1B 3A and 3B. Universal joint **2** is held in place by retainer clip **7** which is apertured to allow wand **1** (Fig. 3A) to pass therethrough while holding ball **15** in place.

As shown in Fig. 3A, applicator head **3** in accordance with the embodiment shown in Fig. 2 comprises chamber **6** in its underside and a chamber edge **14** disposed about the lower periphery of chamber **6.** In addition, Fig. 3A depicts a ball in socket universal joint **2,** wherein ball **15** is attached to or forms part of wand **1** and includes an opening **10** to permit flow of fluid sealant into chamber **6.** In accordance with this embodiment, the ball in socket universal joint **2** is constructed by fitting ball **15** into recess **4** in the top of applicator head **3** and is held in place via retainer clip **7.**

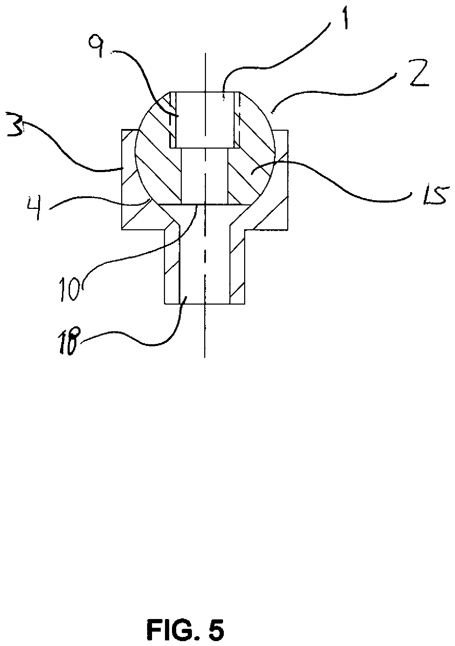

As shown in Fig. 5, a preferred ball in socket universal joint **2,** fits into a recess **4** in the top of applicator head **3** (cut away view shown). Wand **1** is, in the embodiment shown, threaded **9** to attach to ball **15,** which snap fits into applicator head **3** with resistance and a snug fit provided by recess **4** the side of which extends just beyond vertical to create a socket into which ball **15** snaps. The ball **15** comprises opening **10** in fluid connection with wand **1** to enable fluid sealant to flow into an outlet **18** leading into the top of the chamber or, when applicator head **3** is removed, directly out of the ball **15** on the end of the wand. In an alternative embodiment, the ball can be large enough to protrude into the chamber so that the opening in the ball is disposed directly within the chamber to enable flow of fluid sealant from the ball directly into the chamber.

As shown in Fig. 3B, applicator head **3** in accordance with the embodiment shown in Fig. 4 comprises chamber **6** in its underside having a chamber edge **14** disposed about the lower periphery of chamber **6,** and a row of brush bristles **8** extending from chamber edge **14** in a downward direction to allow the user to apply fluid sealant and strike it flat even when the substrate is uneven. In addition, Fig. 3B depicts a ball in socket universal joint **2,** wherein ball **15** is attached to or forms part of wand **1** and includes an opening **10** to permit flow of fluid sealant into chamber **6.**

The brush bristles **8** allow one to apply fluid sealant to an outside corner by drawing applicator head **3** along one side the outside corner such that one section or portion of brush bristles **8,** but no part of chamber **6,** extends just over the edge of the corner in a direction normal to the one side of the outside corner and parallel to the other side of outside corner just above its surface. In such a way, the brush bristles **8** form a dam to strike fluid sealant flat on the surface of the perpendicular wall along the corner gap and to prevent fluid sealant from flowing out onto the other side of the outside corner, such that a corner bead is easily formed. In the embodiment depicted, universal joint **2** and applicator head **3** are as depicted in Fig. 2 and Fig. 3A.

As shown in Fig. 4, the underside of applicator head **3** in accordance with an embodiment of the present invention shown in Fig. 3B comprises chamber **6** in its underside having a chamber edge **14** (Fig. 3B) disposed about the lower periphery of chamber **6,** and a row of brush bristles **8** which extend from chamber edge **14** all around its lower periphery. Accordingly, a user can drag the device in any direction and still strike applied fluid sealant flat or flush with the substrate.

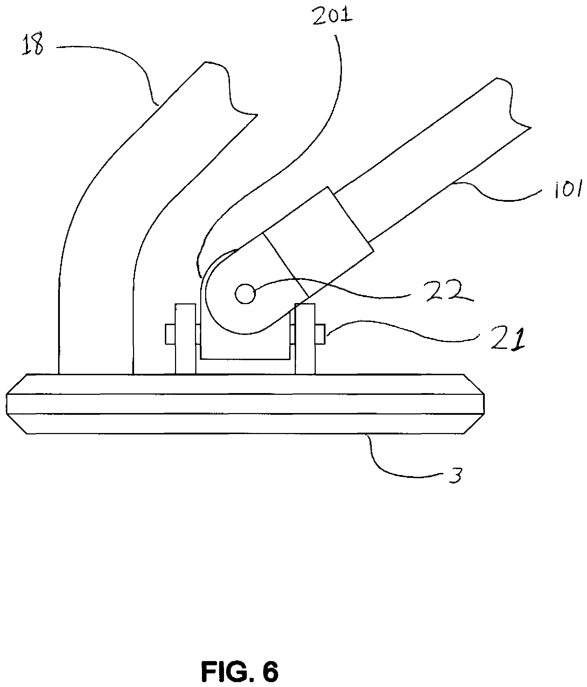

As shown in Fig. 6, in an alternative embodiment, wand **101** and a flexible foam supply hose **18** are separately attached to the applicator head **3.**

In some embodiments, a universal joint may comprise a conventional swivel joint **201** such as, for example, that shown in Fig. 6 comprising two orthogonally disposed pivot axes **21** and **22** that rotate to allow the angle between wand **101** and applicator head **3** to be continuously adjustable throughout a range limited only by constriction caused by the applicator head, substrate and any fluid sealant supply hose in use.

A suitable swivel joint in accordance with the present invention can be attached to the applicator head by a roll pin through one of the pivot axes which may be friction fit into apertures cast or attached to the top of applicator head. In such an embodiment, a fluid sealant supply hose may be used separately from the wand or the fluid sealant supply may flow through the wand and out of the wand above the universal joint and then into a boot that completely encloses the wand and the universal joint, like a stick shift boot.

In a preferred embodiment, the applicator head of the device in accordance with the present invention is removable from the wand. For example, the wand is connected to the applicator head by a ball in socket joint with the ball attached to or comprising the end of the wand.

In a particularly preferred embodiment, the ball forms the end of the wand and clicks on and off a socket in the applicator head so that, when unattached to the applicator head, the wand with the naked opening in the ball at its end can be used to apply sealant to an inside corner or constricted area.

A ball in socket joint in accordance with the present invention may be attached into the female recess in the top of the applicator head via any known means. For example, the ball may snap into one or more spring loaded bearing, e.g. a ring of bearings, disposed within the periphery of the female recess in the top of the applicator head. In another embodiment, the ball may be held in place by a removable annular retaining clip, like the one shown in Fig. 3A, having a round opening large enough to permit movement of the wand throughout 360° and at any desired angle to the substrate fit into the recess in the top of the applicator head. In operation, the clip can be held by two or more pins extending downwardly from annular clip into the applicator head to attach into corresponding openings in the top of the applicator head. In yet another embodiment, the retaining clip can be slid into place and held by a small lip extending downward at its periphery to catch a correspondingly shaped plastic tab or ridge molded into the top of chamber to fit snugly under the lip when the clip is closed. Where used, a retaining clip is preferably spring loaded to remain shut and slides open to admit the ball end of the wand into the recess in the top of the chamber. In another suitable ball in socket joint, the ball itself may be fitted onto the wand in a conventional manner. For example, each of the wand and the ball could be threaded.

Most preferably, a socket or recess for receiving a ball on the wand comprises at its topmost portion a ring or annular portion sized to hold the ball in place, e.g. being just smaller than the outer diameter of the ball. The ball may snap in place, i.e. ball and socket could snap together as the ball fits snugly into the socket. Alternatively, the ring portion of the recess may comprise two or more spring loaded tabs disposed at the periphery of the opening in the socket above where the equator line or the midpoint of the ball would come to rest when it is fit into the opening, thereby allowing the ball to snap in to the socket.

The wand of the device in accordance with the present invention may be tubular or have an axial cavity or conduit within it so as to admit fluid sealant flow through it and into the applicator head. Alternatively, the wand has a bypass valve upstream of the applicator head which may simply be a hole in the side of the wand that is held closed when not in used with a removable plug and into which a tube may be inserted to draw foam for application via the tube to any desired gap.

The applicator head of the device in accordance with the present invention and its chamber can be in any shape, i.e. square, rectangular, round or ellipsoid so long as the chamber is wider than the gaps the user seeks to seal.

In some embodiments, the applicator head can have a beveled edge around its lower periphery, like a ski tip, to ease movement along the substrate.

In another embodiment, the applicator head may have a chamber edge on its underside with lower surface profiles other than flat, to allow application over a gap between non-coplanar panels. Such non-flat substrates can be the outside or inside corner of a house, for example. In one embodiment, a single hinged applicator head can access many angles.

The device, including wand, clip, applicator head and the universal joint, can be made of any lightweight durable material, such as sheet metal, e.g. aluminum, or hard plastic.

The lower periphery of the applicator head can comprise various materials that permit the device to slide over or ride over the substrate surface, and can be comprised of, for example, hard plastic or metal, either as part of or made of the same material as the applicator head itself; brush bristles; hard rubber or hard form, such as gasket or squeegee material. Brush bristles are preferred.

Suitable foam generators may comprise any known simple batch mixer or an aerosol can be used to make a suitable foam sealant. For example, a continuous foamer model no. 2M^{∗}172 from E.T. Oakes Corp., Hauppauge, N.Y., or static mixers, as disclosed in U.S. Patents Nos. 5,492,655 (Schuller International Inc.), 4,986,667 (3M), and 6,422,734 (National Gypsum LLC). Still other foam generators include venturi or air eductors to draw and mix air into a fluid stream, such as disclosed in U.S. Patents Nos. 6,010,083 (BetzDearborn Inc.), 6,042,089, and 6,561,438 (Fountainhead Group). The foam can also be dispensed from a pressurized aerosol container, as disclosed in U.S. Patent No. 7,029,609 (Rathor) and references contained therein.

Preferably, the foam generator comprises a static mixer contained in the wand or foam supply tube, such as a bead matrix. When using a static mixer air or propellant and latex are combined and fed to a mixing bed, for example, in the wand of the device. At the outlet of packed bed, foam is already well made, under low pressure, e.g. 140kPa (kilopascals) or 0.14MPa (20 psi). A suitable mixing bed may be 1.5 to 3 cm wide and 3 to 12 cm long, packed with 1-2 mm plastic beads.

The methods of the present invention comprise applying a compressible and flexible fluid sealant, e.g. a foamed sealant polymer composition, preferably an aqueous emulsion polymer composition, with the devices of the present invention to gaps of a building structure under construction or remodeling while, in the same motion, striking the applied foam flush with the surface of the structure, optionally followed by coating or covering the remaining surface of the building to form a weather resistive barrier, such as, preferably, with a paint or coating material.

The methods of applying the sealant and striking it flat or flush with the substrate comprise applying the sealant with little or no applied pressure, i.e. a touch of the applicator chamber edge surface. Accordingly, suitable sealant compositions may include, for example, any foam that can be compressed to a thickness of not more than 3 mm under a stress of no more than 0.035 MPa, preferably, of no more than 0.0035 MPa. Suitable foamed compositions are made with aqueous flexible polymers, such as the elastomeric aqueous emulsion polymers like those used in coatings and paints, as described below.

In operation, sealant or foam is pumped or fed through a wand or tube into an applicator head having a chamber open on the side adjacent a substrate with a peripheral lower surface or edge that conforms to the substrate, i.e. the side of a building, and is applied to seal a crack or gap in the substrate surface via the lower surface of the device. When the chamber edge is moved along the gap, excess foam is stricken flat. The device can be moved in any direction at any time, i.e. translationally, over the structure surface to seal gaps in any orientation and can be operated with no normal pressure beyond the weight of the tool itself, i.e. with a feather light touch.

In the methods of sealing gaps in a sheathed structure, the device can be moved along the gaps at a rate of 0.08 m/s or more, or up to 2.5 m/s, preferably at a rate of 0.5 m/s or more, or up to 2.0 m/s. A brisk walking speed is 1.6 m/s. Rapid application of the sealant is possible because the chamber is replenished with foam to continuously fill the gaps.

The devices may be used to apply fluid sealant to any substrate that demands a leveling or sealing application of a sealant, such as, joint, gaps or cracks in any substrate chosen from sheathed building structures, the interior of buildings, floor joints, e.g. in self-leveling floor applications, stud bays, rafters, attic joints, highways, walkways, cinder block structures, joints in cinder block structures, and concrete structures. Highways or walkways can be concrete or asphalt. Especially suitable substrates may include any building under construction that employs adjacent sheets of wood, plywood, oriented strand board (OSB), cement or gypsum exterior sheathing on a structural frame with gaps between the sheets.

The polymers can be foamed with surfactants, such as non-ionic surfactants; or propellants, such as, for example, air or carbon dioxide. Preferably, the aqueous emulsion polymer foams are sufficiently flexible that, after drying at least one day, a foam strip formed on a mesh backing can be wrapped around a cylindrical metal mandrel with a diameter of 100 mm without cracking. For cold weather applications, a suitable foamed composition (a) can, after drying at least one day, be formed into a foam strip comprising a mesh backing and wrapped around cylindrical metal mandrel with a diameter of 50 mm without cracking.

Suitable coatings or coverings to form a weather resistive barrier preferably comprises paint or coating material, such as an aqueous emulsion polymer paint or coating, and, preferably, an aqueous emulsion of an elastomeric or flexible polymer, such as one having a glass transition temperature or Tg of 25 °C or less. In other embodiments, the covering of the weather resistive barrier comprises tar paper, or other weather resistant barrier such as polyolefin wovens like Tyvek™ from DuPont, Wilmington, DE.

Suitable polymeric coating composition or paints for covering the remaining surface of the building having a density when dried of greater than 0.7 g/ml, preferably an elastomeric coating composition, over the sealed structure, e.g. sheathing. Suitable polymeric coatings may be selected so as to allow for an appropriate water vapor transmission for the building and may comprise, for example, rubbery polymer emulsions, flexible, acrylic polymer emulsions such as Rhoplex™ EC-2540 from Rohm and Haas Company, Phila., PA, styrene-acrylic copolymers, such as Sto Gold Coat from Sto Corp of Atlanta, GA, and acrylic and/or asphalt emulsion coatings, such as Henry Airbloc 33 (an acrylic copolymer) or Henry Airbloc 06WB (an asphalt emulsion), each from Henry Inc. of Huntington Park, Ca, vinyl acetate-acrylics, ethylene-vinyl acetates, styrene-butadienes, and polyurethane dispersions.

Suitable coating or paint compositions can be applied by any known method, including by spray equipment, brush or roller.

## Claims

1. A device (10) for applying a fluid sealant comprising a wand (1) with a fluid sealant supply either as part of the wand (1) or as a separate supply tube and an applicator head (3), wherein, the wand is attached to the top of an applicator head (3) via a universal joint (2),
further wherein, the applicator head (3) includes a chamber (6) on its underside which is sufficiently large to enable a constant supply of a fluid sealant to a substrate that is to be sealed, and,
still further wherein, the applicator head has disposed around its lower periphery a chamber edge (14) adapted to strike the sealant flat, which lower periphery is a beveled edge or which chamber edge (14) has short brush bristles (8) disposed within it in a normal relation to the bottom plane of the applicator head (3).

2. The device as claimed in claim 1, wherein the wand (1) is hollow in an axial direction, whereby the wand (1) delivers the fluid sealant to the applicator head (3) through an opening in the universal joint (2).

3. The device as claimed in claim 1, wherein the wand (1) is a handle and, as a separate fluid sealant supply, a supply tube is attached to the applicator head separately from the wand.

4. The device as claimed in claim 1, wherein the universal joint (2) attaching the wand (1) to the top of the applicator head (3) comprises a ball in socket joint (15, 4) through which the sealant can flow.

5. The device as claimed in claim 1, wherein the applicator head (3) is removable.

6. The device as claimed in claim 1, wherein the wand (1) or supply tube has disposed within it one or more foam generator that comprises a static mixer.

7. A method of forming a seal comprising applying a compressible sealant composition to a gap, crack or joint in a substrate with the device as claimed in claim 1, while, in the same motion, striking the applied foam flat or flush with the surface of the substrate, optionally, followed by coating or covering the remaining surface of the substrate to form a weather resistive barrier.

8. The method as claimed in claim 7, wherein the applying of the sealant is with no applied pressure aside from that applied by the weight of the applicator head (3).

9. The method as claimed in claim 7, wherein the applying of the sealant to the gaps is performed at a rate of 0.08 m/s or more and up to 2.5 m/s.

## Patentansprüche

1. Eine Vorrichtung (10) zum Aufbringen eines fluiden Dichtungsmittels, beinhaltend einen Stab (1) mit einer Zufuhr fluiden Dichtungsmittels, entweder als Teil des Stabs (1) oder als separates Zufuhrrohr, und einen Applikatorkopf (3), wobei der Stab über ein Universalgelenk (2) an dem oberen Teil eines Applikatorkopfes (3) befestigt ist,
wobei ferner der Applikatorkopf (3) an seiner Unterseite eine Kammer (6) umfasst, die ausreichend groß ist, um eine konstante Zufuhr eines fluiden Dichtungsmittels zu einem abzudichtenden Substrat zu ermöglichen, und
wobei noch ferner der Applikatorkopf einen um seine untere Peripherie angeordneten Kammerrand (14) aufweist, der angepasst ist, um das Dichtungsmittel flach zu streichen, **dadurch gekennzeichnet, dass**
der Kammerrand (14) eine Reihe von Bürstenborsten (8) aufweist, die sich von dem Kammerrand (14) in einer Abwärtsrichtung erstrecken.

2. Vorrichtung gemäß Anspruch 1, wobei der Stab (1) in einer axialen Richtung hohl ist, wodurch der Stab (1) das fluide Dichtungsmittel durch eine Öffnung in dem Universalgelenk (2) an den Applikatorkopf (3) liefert.

3. Vorrichtung gemäß Anspruch 1, wobei der Stab (1) ein Griff ist und ein Zufuhrrohr als separate Zufuhr fluiden Dichtungsmittels separat von dem Stab an dem Applikatorkopf befestigt ist.

4. Vorrichtung gemäß Anspruch 1, wobei das Universalgelenk (2), das den Stab (1) an dem oberen Teil des Applikatorkopfes (3) befestigt, ein Kugelgelenk (15, 4) beinhaltet, durch das das Dichtungsmittel fließen kann.

5. Vorrichtung gemäß Anspruch 1, wobei der Applikatorkopf (3) entfernbar ist.

6. Vorrichtung gemäß Anspruch 1, wobei der Stab (1) oder das Zufuhrrohr einen oder mehrere darin angeordnete Schaumerzeuger aufweist, die einen statischen Mischer beinhalten.

7. Ein Verfahren zum Bilden einer Dichtung, das das Aufbringen einer komprimierbaren Dichtungsmittelzusammensetzung auf eine Lücke, einen Riss oder eine Verbindungsstelle in einem Substrat mit der Vorrichtung gemäß Anspruch 1 beinhaltet, während mit derselben Bewegung der aufgebrachte Schaum flach oder bündig mit der Oberfläche des Substrats gestrichen wird, optional gefolgt von Beschichten oder Bedecken der verbleibenden Oberfläche des Substrats, um eine wetterfeste Barriere zu bilden.

8. Verfahren gemäß Anspruch 7, wobei das Aufbringen des Dichtungsmittels ohne aufgebrachten Druck, abgesehen von dem durch das Gewicht des Applikatorkopfes (3) aufgebrachten, erfolgt.

9. Verfahren gemäß Anspruch 7, wobei das Aufbringen des Dichtungsmittels auf die Lücken mit einer Geschwindigkeit von 0,08 m/s oder mehr und bis zu 2,5 m/s durchgeführt wird.

## Revendications

1. Un dispositif (10) pour appliquer un produit d'étanchéité fluide comprenant un tube (1) avec un approvisionnement en produit d'étanchéité fluide soit faisant partie du tube (1), soit sous forme de tuyau d'approvisionnement séparé et une tête d'applicateur (3), dans lequel, le tube est attaché sur le dessus d'une tête d'applicateur (3) par l'intermédiaire d'un joint universel (2),
en sus dans lequel, la tête d'applicateur (3) inclut une chambre (6) sur son dessous qui est suffisamment grande pour permettre un approvisionnement constant en un produit d'étanchéité fluide d'un substrat qui doit être étanchéifié, et,
en sus encore dans lequel, la tête d'applicateur a, disposé autour de sa périphérie inférieure, un bord de chambre (14) conçu pour aplatir en le lissant le produit d'étanchéité, **caractérisé en ce que**
le bord de chambre (14) a une rangée de poils de brosse (8) s'étendant depuis le bord de chambre (14) dans un sens descendant.

2. Le dispositif tel que revendiqué dans la revendication 1, dans lequel le tube (1) est creux dans un sens axial, moyennant quoi le tube (1) fournit le produit d'étanchéité fluide à la tête d'applicateur (3) à travers une ouverture dans le joint universel (2).

3. Le dispositif tel que revendiqué dans la revendication 1, dans lequel le tube (1) est une poignée et, sous forme d'approvisionnement en produit d'étanchéité fluide séparé, un tuyau d'approvisionnement est attaché à la tête d'applicateur séparément du tube.

4. Le dispositif tel que revendiqué dans la revendication 1, dans lequel le joint universel (2) attachant le tube (1) sur le dessus de la tête d'applicateur (3) comprend un joint à rotule (15, 4) à travers lequel le produit d'étanchéité peut s'écouler.

5. Le dispositif tel que revendiqué dans la revendication 1, dans lequel la tête d'applicateur (3) est amovible.

6. Le dispositif tel que revendiqué dans la revendication 1, dans lequel le tube (1) ou le tuyau d'approvisionnement a, disposé en son sein, un générateur de mousse ou plus qui comprend un mélangeur statique.

7. Un procédé de formation d'un scellement étanche comprenant le fait d'appliquer une composition de produit d'étanchéité compressible sur un interstice, une fissure ou un joint dans un substrat avec le dispositif tel que revendiqué dans la revendication 1, tout en, dans le même mouvement, aplatissant ou mettant à niveau en la lissant la mousse appliquée avec la surface du substrat, facultativement, suivi par le fait de revêtir ou de recouvrir la surface restante du substrat afin de former une barrière résistant aux intempéries.

8. Le procédé tel que revendiqué dans la revendication 7, dans lequel le fait d'appliquer le produit d'étanchéité s'effectue sans aucune pression appliquée à part celle qui est appliquée par le poids de la tête d'applicateur (3).

9. Le procédé tel que revendiqué dans la revendication 7, dans lequel le fait d'appliquer le produit d'étanchéité sur les interstices est réalisé à une vitesse de 0,08 m/s ou plus et allant jusqu'à 2,5 m/s.
